(19) Europäisches Patentamt
European Patent Office
Office européen des brevets

(11) **EP 2 501 737 B1**

(12) **EUROPEAN PATENT SPECIFICATION**

(45) Date of publication and mention
of the grant of the patent:
**05.11.2014 Bulletin 2014/45**

(51) Int Cl.:
**C08G 18/10** (2006.01)   **C08G 18/67** (2006.01)
**C09D 175/16** (2006.01)   **C03C 25/10** (2006.01)

(21) Application number: **10803286.3**

(22) Date of filing: **22.12.2010**

(86) International application number:
**PCT/NL2010/050877**

(87) International publication number:
**WO 2011/081519 (07.07.2011 Gazette 2011/27)**

(54) **D1499 RADIATION CURABLE RESIN COMPOSITION**

D1499 STRAHLUNGSHÄRTBARE HARZUSAMMENSETZUNG

COMPOSITION DE RÉSINE DURCISSABLE PAR RAYONNEMENT D1499

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.12.2010   JP 2010281823
05.11.2010   JP 2010248039
28.12.2009   JP 2009298154**

(43) Date of publication of application:
**26.09.2012   Bulletin 2012/39**

(73) Proprietors:
• **DSM IP Assets B.V.
6411 TE  Heerlen (NL)**
• **JSR Corporation
Tokyo 105-8640 (JP)**

(72) Inventors:
• **IMAI, Hirokazu
Tokyo 105-8640 (JP)**
• **YAMASHITA, Yuutoku
Tokyo 105-8640 (JP)**
• **YAMAGUCHI, Hiroshi
Tokyo 105-8640 (JP)**
• **KUROSAWA, Takahiko
Tokyo 105-8640 (JP)**

(74) Representative: **Jansen, Cornelis Marinus
V.O.
Johan de Wittlaan 7
2517 JR Den Haag (NL)**

(56) References cited:
**WO-A1-2006/057795      US-A- 5 391 602
US-A1- 2002 146 225**

**Description**

FIELD OF THE INVENTION

The present invention relates to a liquid curable resin composition having characteristics suitable for optical fiber coating material, particularly the primary material of optical fiber.

BACKGROUND OF THE INVENTION

Optical fiber is manufactured by coating glass fiber obtained by hot melt spinning of glass with resin for the purpose of protection and reinforcement. A known structure of this resin coating is one in which a flexible primary coating layer (called "primary coating layer" hereinafter) is first provided on the surface of the optical fiber, and a highly rigid secondary coating layer (called "secondary coating layer" hereinafter) is provided on the outside of it. Optical fiber having a structure in which a primary coating layer and a secondary coating layer are provided on a single glass fiber is normally called an optical fiber strand, but optical fiber strands may also have a colored ink layer or upjacket layer on the outside of the secondary coating layer. Additionally, ribbon-type optical fibers and optical fiber cables in which multiple optical fiber strands are held by a bundling material are also well known.

The resin composition used for forming the primary coating layer of an optical fiber strand is called the primary material; the resin composition used for forming the secondary coating layer of an optical fiber strand is called the secondary material; the resin composition used as the bundling material of multiple optical fiber strands is called the bundling material. There are also cases where multiple ribbon-type optical fibers or optical fiber cables are further bundled by bundling material, and the bundling material used in such cases is also called bundling material. Widely known resin coating methods include coating with liquid curable resin composition and then curing by heat or light, particularly ultraviolet light.

Of these coating materials, the cured product of the primary material must be flexible, and the primary coating layer normally has a Young's modulus of 1-10 MPa. In addition, since the primary material is the primary coating on the glass fiber, the resin liquid must have excellent stability and the cured product must have excellent water resistance, and because it must have fast coating ability, it must have particularly stable viscosity characteristics. Known liquid curable resin compositions that are useful as this type of primary material include a composition having a low-swelling aliphatic urethane oligomer in an organic solvent such as gasoline (see Japanese Unexamined Patent Application Publication No. H5-306146), a composition containing an aliphatic urethane oligomer and a hydrocarbon monomer (see Japanese Unexamined Patent Application Publication No. H5-306147), and a composition in which a certain silane coupling agent has been blended (Japanese Unexamined Patent Application Publication No. 2001-130929). Furthermore, a liquid curable resin composition for primary material of optical fiber having excellent fast coating ability due to the use of an acrylate monomer having a straight-chain alkyl group is also known (Japanese Unexamined Patent Application Publication No. 2005-263946).

The cured product of the secondary material must be rigid, and the secondary coating layer normally has a Young's modulus of 100-1000 MPa.

It is known that if localized pressure is applied to the side surface of an optical fiber strand, the core of that portion of glass fiber is bent with a small radius of curvature, resulting in optical loss. This bending phenomenon is called microbending, and the optical loss due to microbending is called microbending loss. Known techniques aimed at preventing microbending include providing a buffer layer (upjacket layer) having a low Young's modulus (see Japanese Unexamined Patent Application Publication No. H5-281431), and combining a primary coating layer having a low Young's modulus with a secondary coating layer having a high Young's modulus (see Japanese Unexamined Patent Application Publication (Translation of PCT Application) No. 2006-528374 and United States Patent Application Publication No. 2003/0123839 (abandoned as of April 29, 2005). Japanese Unexamined Patent Application Publication (Translation of PCT Application) No. 2006-528374 and United States Patent Application Publication No. 2003/0123839 disclose primary materials in which a urethane acrylate and acrylate monomer are blended, that provide a cured product having a Young's modulus of 1.3 MPa or less.

WO 2006 057795 describes a polyurethane acrylate coating composition based on a reaction product of Tetramethylxylylenediisocyanate (TMXDI)/polypropyleneglycol prepolymer further reacted with an alcohol and hydroxy alkyl(meth)acrylate. A further monofunctional acrylate monomer is used to cure the urethane acrylate.

US 2002 146 225 deals with a radiation curable resin glass fiber coating composition based on a reaction product of TDI, polypropylene glycol (MW 4000) and hydroxyethyl acrylate wt% 69,7. A monofunctional acrylate 20,4 wt% is added and 6,4 wt% of a difunctional acrylate monomer. The composition further contains photoinitiators wt% 2,5 and 1 wt% of a silane coupling agent. The use of polymerization inhibitors is disclosed.

It is known that there are many conventional primary materials that have insufficient flexibility for preventing microbending, and even when flexibility is sufficient, they are not sufficient from the standpoint of mechanical strength, typified by fracture elongation or fracture strength, and primary materials having both flexibility (low Young's modulus) and mechanical strength have not been found.

It would be desirable to develop a liquid curable resin composition having flexibility (low Young's modulus) and high mechanical strength suitable for the primary material of optical fiber strands such that the primary coating, once cured, is effective for preventing microbending and reducing microbending loss.

SUMMARY OF THE INVENTION

The first aspect of the instant claimed invention is a radiation curable resin composition for forming the primary coating layer of optical fiber, wherein the contained quantity of (A) urethane oligomer containing the reactants of an aliphatic polyester or polyether diol and a diisocyanate and a monohydric alcohol, or urethane oligomer obtained by reacting the reactants of an aliphatic polyester or polyether diol and a diisocyanate with a monohydric alcohol and then reacting a hydroxyl group-containing (meth)acrylate, is 50-90 mass%; the contained quantity of (B) monomer having one ethylenically unsaturated group is 5-45 mass%; and the contained quantity of (C) monomer having two or more ethylenically unsaturated groups is 2 mass% or less.

The second aspect of the instant claimed invention is a radiation curable resin composition for forming the primary coating layer of optical fiber according to the first aspect of the instant claimed invention, wherein said component (A) is a urethane oligomer obtained by reacting a monohydric alcohol with the reactants of an aliphatic polyester or polyether diol and a diisocyanate, and then reacting a hydroxyl group-containing (meth)acrylate and a silane coupling agent.

The third aspect of the instant claimed invention is a radiation curable resin composition for forming the primary coating layer of optical fiber according to the first or second aspect of the instant claimed invention, wherein component (A) has an average of more than 1.0 structural units originating from aliphatic polyester or polyether diol.

The fourth aspect of the instant claimed invention is a radiation curable resin composition for forming the primary coating layer of optical fiber according to any one of the first or second or third aspects of the instant claimed invention, wherein component (A) comprises one or more urethane oligomers selected from the group consisting of

(A1) a urethane (meth)acrylate having an average of more than 1.0 structural units originating from polyester or polyether diol and having two (meth)acryloyl groups,
(A2) a urethane (meth)acrylate having an average of more than 1.0 structural units originating from polyester or polyether diol and having one (meth)acryloyl group, and
(A3) A urethane oligomer having an average of more than 1.0 structural units originating from polyester or polyether diol and having no (meth)acryloyl groups.

The fifth aspect of the instant claimed invention is a radiation curable resin composition for forming the primary coating layer of optical fiber according to the fourth aspect of the instant claimed invention, wherein

(A1) is a compound with general formula A-(ICN-POL)$_n$-ICN-A,
(A2) is a compound with general formula A-(ICN-POL)$_n$-ICN-R$^1$, and
(A3) is a compound with general formula R$^2$-(ICN-POL)$_n$-ICN-R$^2$, wherein
A is an organic group having a (meth)acryloyl group,
ICN is a structural unit originating from diisocyanate,
POL is a structural unit originating from polyester or polyether diol,
R$^1$ and R$^2$ are independently organic groups that do not have a (meth)acryloyl group, and
n is a number greater than 1.0.

The sixth aspect of the instant claimed invention is a radiation curable resin composition for forming the primary coating layer of optical fiber according to the fourth or fifth aspects of the instant claimed invention, wherein component (A) comprises each of (A1), (A2), and (A3).

The seventh aspect of the instant claimed invention is a radiation curable resin composition for forming the primary coating layer of optical fiber according to any one of the fourth, fifth or sixth aspects of the instant claimed invention, wherein the quantity of component (A1) is 30-60 mass%, the quantity of component (A2) is 30-60 mass%, and the quantity of component (A3) is 1-20 mass% with respect to the total quantity of component (A), preferably the quantity of component (A1) is 40-50 mass%, the quantity of component (A2) is 40-50 mass% and the quantity of component (A3) is 1-10 mass% with respect to the total quantity of component (A).

The eighth aspect of the instant claimed invention is a radiation curable resin composition for forming the primary coating layer of optical fiber according to any one of the first, second, third, fourth, fifth, sixth or seventh aspects of the instant claimed invention, wherein the composition further comprises a polymerization inhibitor (D) in a quantity of 0.1-10 mass%, and a silane coupling agent (E) in a quantity of 0.01-2 mass%.

The ninth aspect of the instant claimed invention is a radiation curable resin composition for forming the primary coating layer of optical fiber according to any one of the first, second, third or fourth aspects of the instant claimed invention, wherein said component (A) is a urethane oligomer containing the reactants of an aliphatic polyester diol and a diisocyanate and a monohydric alcohol, or a urethane oligomer obtained by reacting the reactants of an aliphatic polyester diol and a diisocyanate with a monohydric alcohol and then reacting a hydroxyl group-containing (meth)acrylate.

The tenth aspect of the instant claimed invention is a radiation curable resin composition for forming the primary coating layer of optical fiber according to any one of the first, second, third or fourth aspects of the instant claimed invention, wherein said component (A) is a urethane oligomer containing the reactants of an aliphatic polyether diol and a diisocyanate and a monohydric alcohol, or a urethane oligomer obtained by reacting the reactants of an aliphatic polyether diol and a diisocyanate with a monohydric alcohol and then reacting a hydroxyl group-containing (meth)acrylate.

The eleventh aspect of the instant claimed invention is an optical fiber primary coating layer obtained by curing the radiation curable resin composition according any one of the first, second, third, fourth, fifth, sixth, seventh, eighth, ninth or tenth aspects of the instant claimed invention.

The twelfth aspect of the instant claimed invention is an optical fiber primary coating layer according to the eleventh aspect of the instant claimed invention, wherein the Young's modulus is 0.9 MPa or less.

The thirteenth aspect of the instant claimed invention is an optical fiber strand comprising an optical fiber primary coating of the eleventh or twelfth aspects of the instant claimed invention and any optical fiber secondary coating.

The fourteenth aspect of the instant claimed invention is an optical fiber strand comprising an optical fiber secondary coating layer having a Young's modulus of at least 1000 MPa, in contact with the outside of the optical fiber primary coating layer according to the eleventh or twelfth aspects of the instant claimed invention.

DETAILED DESCRIPTION OF THE INSTANT CLAIMED INVENTION

As a result of various studies to obtain a composition having the aforementioned characteristics, the inventors discovered that these problems can be solved using a radiation curable composition which combines a urethane oligomer produced by a certain production method and a compound having one ethylenically unsaturated group, and they thereby achieved the present invention.

That is, the present invention provides a radiation curable resin composition for the primary coating layer of optical fiber, wherein the contained quantity of (A) urethane oligomer containing the reactants of an aliphatic polyester or polyether diol and a diisocyanate and a monohydric alcohol, or urethane oligomer obtained by reacting the reactants of an aliphatic polyester or polyether diol and a diisocyanate with a monohydric alcohol and then reacting a hydroxyl group-containing (meth)acrylate, is 50-90 mass%; the contained quantity of (B) monomer having one ethylenically unsaturated group is 5-45 mass%; and the contained quantity of (C) monomer having two or more ethylenically unsaturated groups is 2 mass% or less.

Also, the present invention provides an optical fiber strand comprising an optical fiber primary coating layer obtained by curing said radiation curable resin composition, and an optical fiber secondary coating layer having a Young's modulus of at least 1000 MPa in contact with the outside of said primary coating layer.

The liquid curable resin composition of the present invention has a composition viscosity suitable for fast curing ability and fast coating ability. Also, it has flexibility (low Young's modulus) and high mechanical strength (fracture elongation, fracture strength) suitable for a primary material. Therefore, the composition of the present invention is useful as an optical fiber coating material, particularly a primary material.

Component (A) used in the liquid curable resin composition of the present invention is a urethane oligomer containing the reactants of an aliphatic polyester or polyether diol and a diisocyanate and a monohydric alcohol, or a urethane oligomer obtained by reacting the reactants of an aliphatic polyester or polyether diol and a diisocyanate with a monohydric alcohol and then reacting a hydroxyl group-containing (meth)acrylate. Note that in this Specification, a urethane oligomer is an oligomer having urethane bonds, and encompasses urethane (meth)acrylates, which are urethane oligomers that have ethylenically unsaturated groups, and urethane oligomers that do not have ethylenically unsaturated groups.

The urethane oligomer obtained by reacting the reactants of an aliphatic polyester or polyether diol and a diisocyanate with a monohydric alcohol and then reacting a hydroxyl group-containing (meth)acrylate of component (A) preferably contains component (A3) described below, and more preferably contains components (A1), (A2) and (A3) described below. Components (A1)-(A3) may be synthesized as a mixture by the polymerization method of component (A) described above, or they may be synthesized separately and then mixed.

Component (A1) is a urethane (meth)acrylate having an average of more than 1.0 structural units originating from polyester or polyether diol and having two (meth)acryloyl groups, and it preferably has the structure represented by formula (1) below.

$$A\text{-}(ICN\text{-}POL)_n\text{-}ICN\text{-}A \qquad (1)$$

Component (A2) is a urethane (meth)acrylate having an average of more than 1.0 structural units originating from polyester or polyether diol and having one (meth)acryloyl group, and it preferably has the structure represented by formula (2) below.

$$A\text{-}(ICN\text{-}POL)_n\text{-}ICN\text{-}R^1 \qquad (2)$$

Component (A3) is a urethane oligomer having an average of more than 1.0 structural units originating from polyester or polyether diol and having no (meth)acryloyl groups, and it preferably has the structure represented by formula (3) below.

$$R^2\text{-}(ICN\text{-}POL)_n\text{-}ICN\text{-}R^2 \qquad (3)$$

In formulas (1), (2) and (3) above, A is an organic group having a (meth)acryloyl group, preferably a group originating from a hydroxyl group-containing (meth)acrylate. ICN is a structural unit originating from diisocyanate, and POL is a structural unit originating from polyester or polyether diol. $R^1$ and $R^2$ are organic groups that do not have a (meth)acryloyl group, and n is a number greater than 1.0, preferably 1.1-3.0, more preferably 1.3-2.5, and particularly preferably 1.5-2.0. The values of POL, ICN and n in formulas (1)-(3) are each independent. The multiple $R^2$s of formula (3) are each independent. The bond represented by "-" is a urethane bond.

$R^1$ of formulas (1), (2) and (3) is preferably a group originating from a monohydric alcohol or silane coupling agent, and $R^2$ is preferably a group originating from a monohydric alcohol.

The urethane oligomer containing the reactants of an aliphatic polyester or polyether diol and a diisocyanate and a monohydric alcohol of component (A) is a urethane oligomer that does not have any ethylenically unsaturated groups, and is preferably a urethane oligomer represented by formula (3) above.

Component (A1) forms a bridge structure in the cured product due to having two (meth)acryloyl groups, and it can improve the mechanical strength of the cured product. Component (A2) does not form a bridge structure in the cured product because it has one (meth)acryloyl group, but it bonds to the resin matrix and can provide flexibility to the cured product. Also, due to the fact that $R^1$ of formula (2) includes component (A2), which is a structural unit originating from a silane coupling agent, the glass adhesion characteristics of the cured product are improved. Component (A3) does not form any covalent bonds in the cured product because it has no (meth)acryloyl group, and it is particularly effective in providing flexibility to the cured product.

Examples of diisocyanates that can be used in synthesis of the urethane oligomer of component (A) include aromatic diisocyanates, alicyclic diisocyanates and aliphatic diisocyanates. Examples of aromatic diisocyanates include 2,4-tolylene diisocyanate, 2,6-tolylene diisocyanate, 1,3-xylylene diisocyanate, 1,4-xylylene diisocyanate, 1,5-naphthylene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, bis(2-isocyanate ethyl)fumarate, 6-isopropyl-1,3-phenyl diisocyanate, 4-diphenylpropane diisocyanate and tetramethylxylylene diisocyanate. Examples of alicyclic diisocyanates include isophorone diisocyanate, methylene bis(4-cyclohexyl isocyanate), hydrogenated diphenylmethane diisocyanate, hydrogenated xylylene diisocyanate, 2,5-bis(isocyanate methyl)-bicyclo[2.2.1]heptane and 2,6-bis(isocyanate methyl)-bicyclo[2.2.1]heptane. Examples of aliphatic diisocyanates include 1,6-hexane diisocyanate, 2,2,4-trimethylhexamethylene diisocyanate and lysine diisocyanate.

From the viewpoint of economically obtaining a composition of stable quality, aromatic diisocyanates are preferred, particularly 2,4-tolylene diisocyanate and 2,6-tolylene diisocyanate. These diisocyanates may be used alone or in combinations of two or more types.

The diol used in production of the urethane oligomer of component (A) is not particularly limited, but aliphatic polyester or polyether diols are preferred. For example, polyethylene glycol, polypropylene glycol, polytetramethylene glycol, polyhexamethylene glycol, polyheptamethylene glycol, polydecamethylene glycol and aliphatic polyester or polyether diols obtained by ring-opening copolymerization of two or more ion-polymerizable cyclic compounds are preferred.

Examples of the above ion-polymerizable cyclic compounds include cyclic ethers such as ethylene oxide, propylene oxide, butene-1-oxide, isobutene oxide, 3,3-bischloromethyl oxetane, tetrahydrofuran, 2-methyltetrahydrofuran, 3-methyltetrahydrofuran, dioxane, trioxane, tetraoxane, cyclohexene oxide, styrene oxide, epichlorohydrin, glycidyl methacrylate, allyl glycidyl ether, allyl glycidyl carbonate, butadiene monoxide, isoprene monoxide, vinyl oxetane, vinyltetrahydrofuran, vinylcyclohexene oxide, phenyl glycidyl ether, butyl glycidyl ether and glycidyl benzoate.

Specific examples of polyester or polyether diols obtained by ring-opening copolymerization of two or more of the aforementioned ion-polymerizable cyclic compounds include binary copolymers obtained from a combination of tetrahydrofuran and propylene oxide, tetrahydrofuran and 2-methyltetrahydrofuran, tetrahydrofuran and 3-methyltetrahydrofuran, tetrahydrofuran and ethylene oxide, propylene oxide and ethylene oxide, and butane-1-oxide and ethylene oxide, and tertiary copolymers obtained from a combination of tetrahydrofuran, butane-1-oxide and ethylene oxide.

Polyester or polyether diols obtained by ring-opening copolymerization of the above ion-polymerizable cyclic compounds with cyclic imines such as ethylene imine, with cyclic lactonic acids such as β-propiolactone or lactide glycolate, or with dimethylcyclopolysiloxane may also be used.

The above aliphatic polyester or polyether diols are commercially available as PTMG650, PTMG1000 and PTMG2000 (manufactured by Mitsubishi Chemical Corp.), PPG400, PPG1000, Excenol 720, 1020 and 2020 (manufactured by Asahi-Olin Ltd.), PEG1000, Unisafe DC1100 and DC1800 (manufactured by Nippon Oil and Fats Co., Ltd.), PPTG2000, PPTG1000, PTG400 and PTGL2000 (manufactured by Hodogaya Chemical Co., Ltd.), Z-3001-4, Z-3001-5, PBG2000A, PBG2000B, EO/BO4000 and EO/BO2000 (manufactured by Daiichi Kogyo Seiyaku Co., Ltd.) and Acclaim 2200, 2220, 3201, 3205, 4200, 4220, 8200 and 12000 (manufactured by Sumitomo Bayer Urethane Co., Ltd.).

Among these aliphatic polyester or polyether diols, a ring-opened polymer of one or more ion-polymerizable cyclic compounds having 2-4 carbons that is a diol of number average molecular weight 1000-5000 g/mol is preferred from the standpoint of obtaining both fast coating ability of the resin liquid and flexibility of the coating material. Preferred compounds are ring-opened polymers of one or more oxides selected from ethylene oxide, propylene oxide, butane-1-oxide, and isobutene oxide, having a number average molecular weight of 1000-4000 g/mol. A ring-opened polymer of propylene oxide having a number average molecular weight of 1000-3000 g/mol is particularly preferred.

As the hydroxyl group-containing (meth)acrylate used in synthesis of the urethane oligomer of component (A), hydroxyl group-containing (meth)acrylates in which the hydroxyl group is bonded to a primary hydrocarbon (called "first hydroxyl-containing (meth)acrylates") and hydroxyl group-containing (meth)acrylates in which the hydroxyl group is bonded to a secondary hydrocarbon (called "second hydroxyl-containing (meth)acrylates") are preferred. Hydroxyl group-containing (meth)acrylates in which the hydroxyl group is bonded to a tertiary hydrocarbon (called "third hydroxyl-containing (meth)acrylates") are not preferred because they have inferior reactivity with isocyanate groups.

Examples of first hydroxyl group-containing (meth)acrylates include 2-hydroxyethyl (meth)acrylate, 3-hydroxypropyl (meth)acrylate, 4-hydroxybutyl (meth)acrylate, 1,6-hexane diol mono(meth)acrylate, pentaerythritol tri(meth)acrylate, dipentaerythritol penta(meth)acrylate, neopentyl glycol mono(meth)acrylate, trimethylol propane di(meth)acrylate and trimethylol ethane di(meth)acrylate.

Examples of second hydroxyl group-containing (meth)acrylates include 2-hydroxypropyl (meth)acrylate, 2-hydroxybutyl (meth)acrylate,

2-hydroxy-3-phenyloxypropyl (meth)acrylate and 4-hydroxycyclohexyl (meth)acrylate. Examples also include compounds obtained by addition reaction of (meth)acrylic acid with a glycidyl group-containing compound such as alkyl glycidyl ether, allyl glycidyl ether or glycidyl (meth)acrylate.

The monohydric alcohol used in synthesis of the urethane oligomer of component (A) is not particularly limited, but methanol, ethanol, propanol or butanol is preferred.

The silane coupling agent used in synthesis of the urethane oligomer of component (A) is not particularly limited, but vinyltrichlorosilane, vinyltriethoxysilane, vinyltris(β-methoxy-ethoxy)silane, β-(3,4-epoxycyclohexyl)-ethyl trimethoxysilane, γ-glycidoxypropyl trimethoxysilane, γ-glycidoxypropylmethyl diethoxysilane, γ-methacryloxypropyl trimethoxysilane, N-(β-aminoethyl)-γ-aminopropyl trimethoxysilane, N-(β-aminoethyl)-γ-aminopropyltrimethyl dimethoxysilane, N-phenyl-γ-aminopropyl trimethoxysilane, γ-chloropropyl trimethoxysilane, γ-mercaptopropyl trimethoxysilane, γ-aminopropyl trimethoxysilane and so forth may be used.

Synthesis of the urethane oligomer containing the reactants of an aliphatic polyester or polyether diol and a diisocyanate and a monohydric alcohol is preferably performed by reacting the hydroxyl groups of the aliphatic polyester or polyether diol with the diisocyanate, and then reacting the monohydric alcohol. By performing such reactions, a urethane oligomer of which both terminals are sealed with a monohydric alcohol, represented by formula (3), is preferably obtained.

Similarly, the urethane oligomer obtained by reacting the reactants of an aliphatic polyester or polyether diol and a diisocyanate with a monohydric alcohol and then reacting a hydroxyl group-containing (meth)acrylate of component (A) is preferably obtained by reacting the monohydric alcohol with the reactants of the aliphatic polyester or polyether diol and the diisocyanate, and then reacting the hydroxyl group-containing (meth)acrylate and silane coupling agent. The urethane oligomer obtained by this synthesis method preferably contains urethane oligomer of which both terminals are sealed with a monohydric alcohol, represented by formula (3). More preferably, in addition to the urethane oligomer represented by formula (3), it also contains a urethane (meth)acrylate in which $R^1$ of formula (2) originates from the silane coupling agent, and a urethane (meth)acrylate in which $R^1$ of formula (2) originates from the monohydric alcohol, and a urethane (meth)acrylate represented by formula (1).

The used proportions of aliphatic polyester or polyether diol, diisocyanate, hydroxyl group-containing (meth)acrylate, silane coupling agent and monohydric alcohol are preferably such that there are 1.1-3 equivalents of isocyanate groups contained in the diisocyanate, 0.2-1.5 equivalents of hydroxyl groups of the hydroxyl group-containing (meth)acrylate, 0.01-0.2 equivalents of reaction sites of the silane coupling agent, and 0.01-1 equivalents of hydroxyl groups of the monohydric alcohol, with respect to 1 equivalent of hydroxyl groups contained in the polyol. By reacting the components in these proportions, a mixture of the urethane oligomers represented by formulas (1), (2) and (3) can be obtained.

In synthesis of urethane (meth)acrylate (A), a urethanization catalyst selected from copper naphthenate, cobalt naphthenate, zinc naphthenate, dibutyltin dilaurate, triethylamine, 1,4-diazabicyclo[2.2.2]octane and 2,6,7-trimethyl-1,4-diazabicyclo[2.2.2]octane is preferably used in an amount of 0.01-1 mass% of the total quantity of the reactants. The reaction is normally carried out at 5-90 °C, particularly preferably at 10-80 °C.

The urethane oligomer (A) is preferably blended in a ratio of 50-90 mass%, more preferably 35-85 mass%, even more preferably 50-83 mass%, with respect to 100 mass% of the total quantity of liquid curable resin composition of the present invention. If the proportion is less than 50 mass%, both the flexibility and the mechanical strength of the cured product may decrease, and if it exceeds 90 mass%, the viscosity of the liquid curable resin composition may increase.

Component (A3) is preferably blended in a ratio of 1-20 mass%, more preferably 1-10 mass%, even more preferably 1-5 mass%, with respect to 100 mass% of the total quantity of component (A). The proportion of component (A3) in component (A) can be determined by quantification by gel permeation chromatography of components extracted when a cured film containing component (A3) is immersed in tetrahydrofuran (THF). Specifically, the difference between the THF extract quantity from cured film *a* which contains component (A3) and the THF extract quantity from cured film b which contains substantially no component (A3) is taken as the quantity of component (A3). Cured film *a* and cured film b are produced by curing compositions having the same composition except for component (A) under the same conditions.

The calibration curve for component (A3) can be created using as a standard the THF extract from a cured film produced from a composition containing only a known quantity of component (A3) as component (A). Detailed conditions of gel permeation chromatography are as stated in the examples. The reason that the quantity of component (A3) can be measured in this way is thought to be that the urethane oligomer of which the two terminals are sealed with monohydric alcohols represented by formula (3) is extracted in THF from the cured film, because it does not have a (meth)acryloyl group, unlike the urethane oligomer represented by formula (1) or formula (2).

The quantities of components (A1), (A2) and (A3) are preferably 30-60 mass% component (A1), 30-60 mass% component (A2) and 1-20 mass% component (A3), and more preferably 40-50 mass% component (A1), 40-50 mass% component (A2) and 1-10 mass% component (A3), with respect to 100 mass% of the total quantity of component (A).

Component (B) used in the composition of the present invention is a compound having one ethylenically unsaturated group other than component (A), and is typically a monomer having one ethylenically unsaturated group. Specific examples of component (B) include vinyl group-containing lactams such as N-vinylpyrrolidone and N-vinylcaprolactam, alicyclic structure-containing (meth)acrylates such as isobornyl (meth)acrylate, bornyl (meth)acrylate, tricyclodecanyl (meth)acrylate, dicyclopentanyl (meth)acrylate, dicyclopentenyl (meth)acrylate and cyclohexyl (meth)acrylate, benzyl (meth)acrylate, 4-butylcyclohexyl (meth)acrylate, acryloylmorpholine, vinylimidazole and vinylpyridine. Further examples include 2-hydroxyethyl (meth)acrylate, 2-hydroxypropyl (meth)acrylate, 4-hydroxybutyl acrylate, stearyl (meth)acrylate, isostearyl (meth)acrylate, tetrahydrofurfuryl (meth)acrylate, polyethylene glycol mono(meth)acrylate, polypropylene glycol mono(meth)acrylate, methoxyethylene glycol (meth)acrylate, ethoxyethyl (meth)acrylate, methoxypolyethylene glycol (meth)acrylate, methoxypolypropylene glycol (meth)acrylate, diacetone (meth)acrylamide, isobutoxymethyl (meth)acrylamide, N,N-dimethyl (meth)acrylamide, t-octyl(meth)acrylamide, dimethylaminoethyl (meth)acrylate, diethylaminoethyl (meth)acrylate, 7-amino-3,7-dimethyloctyl (meth)acrylate, N,N-diethyl(meth) acrylamide, N,N-dimethylaminopropyl (meth)acrylamide, hydroxybutyl vinyl ether, lauryl vinyl ether, cetyl vinyl ether, 2-ethylhexyl vinyl ether, vinyloxyethoxyethyl (meth)acrylate and vinyloxyethyl (meth)acrylate. Among these components (B), vinyl group-containing lactams such as N-vinylpyrrolidone and N-vinylcaprolactam are preferred from the viewpoint of improving curing rate.

Examples of commercially available products of these components (B) include Aronix M-111, M-113, M-114 and M-117 (manufactured by Toagosei Co., Ltd.), Kayarad TC110S, R629 and R644 (manufactured by Nippon Kayaku Co., Ltd.) and IBXA and Viscoat 3700 (manufactured by Osaka Organic Chemical Industry Co., Ltd.).

Component (B) is preferably blended in a proportion of 5-45 mass%, more preferably 10-30 mass%, with respect to 100 mass% of the total quantity of liquid curable resin composition of the present invention.

In the radiation curable resin composition of the present invention, a compound having two or more ethylenically unsaturated groups other than component (A) may be blended as component (C). Component (C) is typically a monomer having two or more ethylenically unsaturated groups. Specific examples of component (C) include trimethylolpropane tri(meth)acrylate, pentaerythritol tri(meth)acrylate, ethylene glycol di(meth)acrylate, tetraethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, trimethylolpropanetrioxyethyl (meth)acrylate, tris(2-hydroxyethyl)isocyanurate tri(meth)acrylate, tris(2-hydroxyethyl)isocyanurate di(meth)acrylate, tricyclodecanedimethanol di(meth)acrylate, di(meth)acrylate of ethylene oxide or propylene oxide addition diol of bisphenol A, di(meth)acrylate of ethylene oxide or propylene oxide addition diol of hydrogenated bisphenol A, epoxy (meth)acrylate obtained by addition of (meth)acrylate to diglycidyl ether of bisphenol A, and triethylene glycol divinyl ether. Commercially available products include Yupimer UV SA1002 and SA2007 (manufactured by Mitsubishi Chemical Corp.), Viscoat 700 (manufactured by Osaka Organic Chemical Industry, Ltd.), Kayarad R-604, DPCA-20, DPCA-30, DPCA-60, DPCA-120, HX-620, D-310 and D-330 (manufactured by Nippon Kayaku Co., Ltd.), and Aronix M-210, M-215, M-315 and M-325 (manufactured by Toagosei Co., Ltd.).

Since component (C) has the effect of increasing bridge density in the cured product, it can improve the mechanical strength of the cured product. However, if an excessive quantity of component (C) is blended, the Young's modulus of the cured product may become excessively large and it may become unsuitable as a primary material. For this reason, the blended quantity of component (C) is preferably 2 mass% or less (0-2 mass%), more preferably 1.5 mass% or less (0-1.5 mass%), with respect to 100 mass% of the total quantity of liquid curable resin composition of the present invention. The blended quantity of component (C) can, for instance, be in the range of from 0.05 to 1.5 mass%.

As the polymerization initiator (D) used in the liquid curable resin composition of the present invention, a heat polymerization initiator or photoinitiator may be used. These heat polymerization initiators or photoinitiators are known to people of ordinary skill in the art. When curing the curable liquid resin composition of the present invention using heat, a heat polymerization initiator such as a peroxide or an azo compound may normally be used. Specific examples include benzoyl peroxide, t-butyl-oxybenzoate and azobisisobutyronitrile.

When curing the resin composition of the present invention using light, a photoinitiator is used, and in addition, a photosensitizer may be added as necessary. Examples of the photoinitiator include 1-hydroxycyclohexyl phenyl ketone, 2,2-dimethoxy-2-phenylacetophenone, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, Michler's ketone, benzoin propyl ether, benzoin ethyl ether, benzyl dimethyl ketal, 1-(4-isopropylphenyl)-2-hydroxy-2-methylpropane-1-one, 2-hydroxy-2-methyl-1-phenylpropane-1-one, thioxanthone, diethylthioxanthone, 2-isopropylthioxanthone, 2-chlorothioxanthone, 2-methyl-1-[4-(methylthio)phenyl]-2-morpholino-propane-1-one, 2,4,6-trimethylbenzoyldiphenylphosphine oxide, bis-(2,6-dimethoxybenzoyl)-2,4,4-trimethylpentylphosphine oxide, Irgacure 184, 369, 651, 500, 907, CGI1700, CGI1750, CGI1850, CG24-61, Darocur 1116 and 1173 (manufactured by Ciba Specialty Chemicals Co., Ltd.), Lucirin TPO (manufactured by BASF) and Ubecryl P36 (manufactured by UCB). Examples of the photosensitizer include triethylamine, diethylamine, N-methyldiethanolamine, ethanolamine, 4-dimethylaminobenzoic acid, methyl 4-dimethylaminobenzoate, ethyl 4-dimethylaminobenzoate, isoamyl 4-dimethylaminobenzoate, and Ubecryl P102, 103, 104 and 105 (manufactured by UCB).

The blended quantity of the polymerization initiator (D) is preferably 0.1-10 mass%, more preferably 0.3-7 mass%, with respect to 100 mass% of the total quantity of liquid curable resin composition of the present invention.

In the liquid curable resin composition of the present invention, a silane coupling agent (E) may also be blended within a range that does not hinder the effect of the invention. Component (E) is not particularly limited, and vinyltrichlorosilane, vinyltriethoxysilane, vinyltris(β-methoxy-ethoxy)silane, β-(3,4-epoxycyclohexyl)-ethyl trimethoxysilane, γ-glycidoxypropyl trimethoxysilane, γ-glycidoxypropylmethyl diethoxysilane, γ-methacryloxypropyl trimethoxysilane, N-(β-aminoethyl)-γ-aminopropyl trimethoxysilane, N-(β-aminoethyl)-γ-aminopropyltrimethyl ditnethoxysilane, N-phenyl-γ-aminopropyl trimethoxysilane, γ-chloropropyl trimethoxysilane, γ-mercaptopropyl trimethoxysilane, γ-aminopropyl trimethoxysilane and so forth may be used. Furthermore, bis-[3-(triethoxysilyl)propyl]tetrasulfide, bis-[3-(triethoxysilyl)propyl]disulfide, γ-trimethoxysilylpropyl dimethylthiocarbamyl tetrasulfide, γ-trimethoxysilylpropyl benzothiazyl tetrasulfide and the like may also be used. Examples of commercially available products of these compounds include SH6062 and SZ6030 (manufactured by Toray-Dow Corning Silicone Co. Ltd.), and KBE 903, 603 and 403 (manufactured by Shin-Etsu Chemical Co., Ltd.). From the viewpoint of adhesion strength between the coating and glass, the silane coupling agent is preferably γ-glycidoxypropyl trimethoxysilane, γ-methacryloxypropyl trimethoxysilane, γ-mercaptopropyl trimethoxysilane or γ-aminopropyl trimethoxysilane. These silane coupling agents may be used alone or in combinations of two or more types.

From the viewpoint of maintaining adhesion strength between the coating and glass, the silane coupling agent (E) is preferably blended in a proportion of 0.01-2 mass%, more preferably 0.1-1.5 mass%, and particularly preferably 0.5-1.5 mass%, with respect to 100 mass% of the total quantity of liquid curable resin composition of the present invention.

Various additives such as antioxidants, coloring agents, UV absorbers, photostabilizers, heat polymerization inhibitors, leveling agents, surfactants, preservatives, plasticizers, lubricants, solvents, fillers, aging prevention agents, wettability improvement agents and coating surface improvement agents may also be included as necessary in the curable liquid resin composition in addition to the aforementioned components. Examples of antioxidants include Irganox 1010, 1035, 1076 and 1222, (manufactured by Ciba Specialty Chemicals Co., Ltd), and Antigene P, 3C, Sumilizer GA-80 and GP (manufactured by Sumitomo Chemical Industries Co., Ltd.). Examples of UV absorbers include Tinuvin P, 234, 320, 326, 327, 328, 329 and 213 (manufactured by Ciba Specialty Chemicals Co., Ltd.), and Seesorb 102, 103, 501, 202, 712 and 704 (manufactured by Shipro Kasei Kaisha, Ltd.). Examples of photostabilizers include Tinuvin 292, 144, 622LD, Sanol LS-770 and 765 (manufactured by Ciba Specialty Chemicals Co., Ltd.), and TM-061 (manufactured by Sumitomo Chemical Industries Co., Ltd.).

The surfactants are not particularly limited, but fatty acid ester-based non-ionic surfactants are preferred because they effectively inhibit defects when the optical fiber strand is immersed in hot water. Non-ionic surfactants such as glycerin fatty acid esters, sorbitan fatty acid esters, polyoxyethylene sorbitan fatty acid esters and polyoxy sorbitol fatty acid esters are particularly preferred.

In the composition of the present invention, other oligomers and polymers as well as other additives may also be blended as necessary within a range such that the characteristics of the liquid curable resin composition of the present invention are not lost.

Examples of other oligomers and polymers include polyester (meth)acrylate, epoxy (meth)acrylate, polyamide (meth)acrylate, siloxane polymers having (meth)acryloyloxy groups, glycidyl methacrylate and the like.

Note that the liquid curable resin composition of the present invention is cured by heat and/or radiation, but here, the radiation is infrared light, visible light, ultraviolet light, X-rays, electron beams, α-rays, β-rays or γ-rays, and ultraviolet light is particularly preferred.

The viscosity at 25 °C of the liquid curable resin composition of the present invention is preferably 0.1-10 Pa·s, more preferably 1-8 Pa·s, from the viewpoints of handling ability and coating ability.

The cured product of the composition of the present invention is useful as the primary material of optical fiber because it has a low Young's modulus. Here, the Young's modulus of the cured product is preferably 0.1-0.9 MPa at 25 °C, more preferably 0.3-0.85 MPa. If the Young's modulus of the cured product is in this range, microbending can be effectively prevented.

The cured product of the composition of the present invention also has excellent mechanical strength. The fracture strength of the cured product is preferably 0.9-10 MPa, more preferably 1.4-10 MPa, and particularly preferably 2.0-10 MPa. The fracture elongation of the cured product is preferably 130-250 %, more preferably 150-220 %, and particularly preferably 180-210 %.

An optical fiber strand which has a primary coating layer formed using the composition of the present invention preferably has a secondary coating layer having a Young's modulus of at least 1000 MPa, preferably 1000-2000 MPa, in contact with the outside of the primary coating layer. If the optical fiber strand has the above structure, microbending can be prevented more effectively. The optical fiber strand may be manufactured by known methods, but in general, it is manufactured by hot melt drawing a melted quartz preform, coating with the primary material and secondary material, and curing by radiation to form the primary coating layer and secondary coating layer. The specific examples herein disclosed are to be considered as being primarily illustrative. Various changes beyond those described, will, no doubt, occur to those skilled in the art; and such changes are to be understood as forming a part of this invention insofar as they fall within the spirit and scope of the appended claims.

EXAMPLES

The present invention is further illustrated with a number of examples, which should not be regarded as limiting the scope of the present invention.

The present invention is described below in more detail by examples, but the present invention is not limited to these examples. In the following examples, the blended quantities are in parts by mass unless otherwise noted.

Synthesis Example 1: Synthesis of Urethane Oligomer (UA-1)

889.82 g of polypropylene glycol of number average molecular weight 3000 g/mol, 76.27 g of 2,4-tolylene diisocyanate and 0.24 g of 2,6-di-t-butyl-p-cresol were prepared in a reaction vessel equipped with a stirrer, and they were heated while stirring until the liquid temperature reached 25 °C. After addition of 0.4 g of dibutyltin dilaurate, the liquid temperature was gradually raised to 50 °C over the course of 30 minutes while stirring. It was stirred for another hour, and after the residual isocyanate group concentration (proportion with respect to prepared quantity) became 1.36 mass% or less, 2.02 g of methanol was added, and it was allowed to react for 1 hour at a liquid temperature of 60 °C. After the residual isocyanate group concentration (proportion with respect to prepared quantity) became 1.08 mass% or less, 4.53 g of γ-mercaptopropyl trimethoxysilane, 26.31 g of 2-hydroxyethylacrylate and 0.399 g of dibutyltin dilaurate were added, and allowed to react for 2 hours. The reaction was considered finished when the residual isocyanate group concentration reached 0.05 mass% or less. The obtained urethane oligomer is referred to as UA-1. UA-1 is a mixture having the urethane oligomers represented by formulas (4)-(7) below as the main components.

$$\text{HEA-TDI-(PPG3000-TDI)}_{1.8}\text{-HEA} \qquad (4)$$

$$\text{HEA-TDI-(PPG3000-TDI)}_{1.8}\text{-Me} \qquad (5)$$

$$\text{HEA-TDI-(PPG3000-TDI)}_{1.8}\text{-Sil} \qquad (6)$$

$$\text{Me-TDI-(PPG3000-TDI)}_{1.8}\text{-Me} \qquad (7)$$

(In formulas (4)-(7), PPG3000 is a structural unit originating from polypropylene glycol of number average molecular weight 3000 g/mol, TDI is a structural unit originating from 2,4-tolylene diisocyanate, HEA is a structural unit originating from 2-hydroxyethylacrylate, Sil is a structural unit originating from γ-mercaptopropyl trimethoxysilane, and Me is a structural unit originating from methanol. The bond represented by "-" is a urethane bond.)

Synthesis Example 2: Synthesis of Urethane Oligomer (UA-2)

888.18 g of polypropylene glycol of number average molecular weight 3000 g/mol, 76.13 g of 2,4-tolylene diisocyanate and 0.24 g of 2,6-di-t-butyl-p-cresol were prepared in a reaction vessel equipped with a stirrer, and they were heated while stirring until the liquid temperature reached 25 °C. After addition of 0.4 g of dibutyltin dilaurate, the liquid temperature was gradually raised to 50 °C over the course of 30 minutes while stirring. It was stirred for another hour, and after the residual isocyanate group concentration (proportion with respect to prepared quantity) became 1.36 mass% or less, 2.02 g of methanol was added, and it was allowed to react for 1 hour at a liquid temperature of 60 °C. After the residual isocyanate group concentration (proportion with respect to prepared quantity) became 1.08 mass% or less, 9.07 g of γ-mercaptopropyl trimethoxysilane, 23.56 g of 2-hydroxyethylacrylate and 0.399 g of dibutyltin dilaurate were added, and allowed to react for 2 hours. The reaction was considered finished when the residual isocyanate group concentration reached 0.05 mass% or less. The obtained urethane oligomer is referred to as UA-2. UA-2 is a mixture having the urethane oligomers represented by the above formulas (4)-(7) as the main components.

Synthesis Example 3: Synthesis of Urethane Oligomer (UA-3)

889.9 g of polypropylene glycol of number average molecular weight 3000 g/mol, 76.28 g of 2,4-tolylene diisocyanate and 0.24 g of 2,6-di-t-butyl-p-cresol were prepared in a reaction vessel equipped with a stirrer, and they were heated while stirring until the liquid temperature reached 25 °C. After addition of 0.4 g of dibutyltin dilaurate, the liquid temperature was gradually raised to 50 °C over the course of 30 minutes while stirring. It was stirred for another hour, and after the residual isocyanate group concentration (proportion with respect to prepared quantity) became 1.36 mass% or less, 2.08 g of methanol was added, and it was allowed to react for 1 hour at a liquid temperature of 60 °C. After the residual isocyanate group concentration (proportion with respect to prepared quantity) became 1.08 mass% or less, 4.65 g of γ-mercaptopropyl trimethoxysilane, 26.05 g of 2-hydroxyethylacrylate and 0.399 g of dibutyltin dilaurate were added, and allowed to react for 2 hours. The reaction was considered finished when the residual isocyanate group concentration reached 0.05 mass% or less. The obtained urethane oligomer is referred to as UA-3. UA-3 is a mixture having the urethane oligomers represented by the above formulas (4)-(7) as the main components.

Synthesis Example 4: Synthesis of Urethane Oligomer (UA-4)

889.98 g of polypropylene glycol of number average molecular weight 3000 g/mol, 76.29 g of 2,4-tolylene diisocyanate and 0.24 g of 2,6-di-t-butyl-p-cresol were prepared in a reaction vessel equipped with a stirrer, and they were heated while stirring until the liquid temperature reached 25 °C. After addition of 0.4 g of dibutyltin dilaurate, the liquid temperature was gradually raised to 50 °C over the course of 30 minutes while stirring. It was stirred for another hour, and after the residual isocyanate group concentration (proportion with respect to prepared quantity) became 1.36 mass% or less, 2.13 g of methanol was added, and it was allowed to react for 1 hour at a liquid temperature of 60 °C. After the residual isocyanate group concentration (proportion with respect to prepared quantity) became 1.07 mass% or less, 4.77 g of γ-mercaptopropyl trimethoxysilane, 25.79 g of 2-hydroxyethylacrylate and 0.399 g of dibutyltin dilaurate were added, and allowed to react for 2 hours. The reaction was considered finished when the residual isocyanate group concentration reached 0.05 mass% or less. The obtained urethane oligomer is referred to as UA-4. UA-4 is a mixture having the urethane oligomers represented by the above formulas (4)-(7) as the main components.

Synthesis Example 5: Synthesis of Urethane Oligomer (UA-5)

890.26 g of polypropylene glycol of number average molecular weight 3000 g/mol, 76.31 g of 2,4-tolylene diisocyanate and 0.24 g of 2,6-di-t-butyl-p-cresol were prepared in a reaction vessel equipped with a stirrer, and they were heated while stirring until the liquid temperature reached 25 °C. After addition of 0.4 g of dibutyltin dilaurate, the liquid temperature was gradually raised to 50 °C over the course of 30 minutes while stirring. It was stirred for another hour, and after the residual isocyanate group concentration (proportion with respect to prepared quantity) became 1.36 mass% or less, 2.31 g of methanol was added, and it was allowed to react for 1 hour at a liquid temperature of 60 °C. After the residual isocyanate group concentration (proportion with respect to prepared quantity) became 1.04 mass% or less, 5.18 g of γ-mercaptopropyl trimethoxysilane, 24.89 g of 2-hydroxyethylacrylate and 0.399 g of dibutyltin dilaurate were added, and allowed to react for 2 hours. The reaction was considered finished when the residual isocyanate group concentration reached 0.05 mass% or less. The obtained urethane oligomer is referred to as UA-5. UA-5 is a mixture having the urethane oligomers represented by the above formulas (4)-(7) as the main components.

Synthesis Example 6: Synthesis of Urethane Oligomer (UA-6)

910.65 g of polypropylene glycol of number average molecular weight 3000 g/mol, 78.06 g of 2,4-tolylene diisocyanate and 0.24 g of 2,6-di-t-butyl-p-cresol were prepared in a reaction vessel equipped with a stirrer, and they were heated while stirring until the liquid temperature reached 25 °C. After addition of 0.4 g of dibutyltin dilaurate, the liquid temperature was gradually raised to 50 °C over the course of 30 minutes while stirring. It was stirred for another hour, and after the residual isocyanate group concentration (proportion with respect to prepared quantity) became 1.36 mass% or less, 10.26 g of methanol was added, and it was allowed to react for 1 hour at a liquid temperature of 60 °C. The reaction was considered finished when the residual isocyanate group concentration reached 0.05 mass% or less. The obtained urethane oligomer is referred to as UA-6. UA-6 is a urethane oligomer represented by the above formula (7).

Synthesis Example 7: Synthesis of Urethane Oligomer (UA-7)

83.972 parts of polypropylene glycol of number average molecular weight 3000 g/mol (Excenol 3020, manufactured by Asahi Glass Co., Ltd.), 7.196 parts of 2,4-tolylene diisocyanate, 0.023 parts of 2,6-di-t-butyl-p-cresol and 5.877 parts of isobornyl acrylate were prepared in a reaction vessel equipped with a stirrer, and they were heated while stirring until the liquid temperature reached 25 °C. The mole ratio of polypropylene glycol to tolylene diisocyanate at this time was 1:1.48. After addition of 0.0375 parts of dibutyltin dilaurate, the liquid temperature was gradually raised to 45 °C over the course of 30 minutes while stirring. After that, the liquid temperature was raised to 50 °C, and it was allowed to react. After the residual isocyanate group concentration (proportion with respect to prepared quantity) became 1.15 wt% or less, 0.162 parts of methyl alcohol was added, and it was allowed to react while stirring at a liquid temperature of 50°C. After the residual isocyanate group concentration (proportion with respect to prepared quantity) became 0.93 wt% or less, 2.243 parts of 2-hydroxyethylacrylate, 0.452 parts of 3-mercaptopropyl trimethoxysilane and 0.0375 parts of dibutyltin dilaurate were added, and it was allowed to react while stirring at a liquid temperature of 65 °C. The reaction was considered finished when the residual isocyanate group concentration reached 0.05 mass% or less. The obtained urethane oligomer is referred to as UA-7. UA-7 is a mixture having the urethane oligomers represented by the above formulas (4)-(7) as the main components.

Comparative Synthesis Example 1: Synthesis of Urethane Oligomer (UX-1)

878.82 g of polypropylene glycol of number average molecular weight 3000 g/mol, 79.08 g of 2,4-tolylene diisocyanate and 0.24 g of 2,6-di-t-butyl-p-cresol were prepared in a reaction vessel equipped with a stirrer, and they were heated while stirring until the liquid temperature reached 25 °C. After addition of 0.4 g of dibutyltin dilaurate, the liquid temperature was gradually raised to 50 °C over the course of 30 minutes while stirring. It was stirred for another hour, and after the residual isocyanate group concentration (proportion with respect to prepared quantity) became 1.48 mass% or less, 4.90 g of γ-mercaptopropyl trimethoxysilane, 36.16 g of 2-hydroxyethylacrylate and 0.399 g of dibutyltin dilaurate were added, and allowed to react for 2 hours at a liquid temperature of 60 °C. The reaction was considered finished when the residual isocyanate group concentration reached 0.05 mass% or less. The obtained urethane oligomer is referred to as UX-1. UX-1 is a mixture having the urethane oligomers represented by formulas (8) and (9) as the main components.

$$\text{HEA-TDI-(PPG3000-TDI)}_{1.7}\text{-HEA} \qquad (8)$$

$$\text{HEA-TDI-(PP03000-TDI)}_{1.7}\text{-Sil} \qquad (9)$$

(In formulas (8) and (9), PPG3000, TDI, HEA and Sil are the same as in formulas (4)-(7).)

Comparative Synthesis Example 2: Synthesis of Urethane Oligomer (UX-2)

888.73 g of polypropylene glycol of number average molecular weight 3000 g/mol, 77.04 g of 2,4-tolylene diisocyanate and 0.24 g of 2,6-di-t-butyl-p-cresol were prepared in a reaction vessel equipped with a stirrer, and they were heated while stirring until the liquid temperature reached 25 °C. After addition of 0.4 g of dibutyltin dilaurate, the liquid temperature was gradually raised to 50 °C over the course of 30 minutes while stirring. It was stirred for another hour, and after the residual isocyanate group concentration (proportion with respect to prepared quantity) became 1.37 mass% or less, 4.58 g of γ-mercaptopropyl trimethoxysilane, 26.57 g of 2-hydroxyethylacrylate and 0.399 g of dibutyltin dilaurate were added, and allowed to react for 1 hour at a liquid temperature of 60 °C. After that, 2.04 g of methanol was added, and allowed to react for 1 hour. The reaction was considered finished when the residual isocyanate group concentration reached 0.05 mass% or less. The obtained urethane oligomer is referred to as UX-2. UX-2 contains substantially none of the urethane oligomer represented by the above formula (7).

Comparative Synthesis Example 3: Synthesis of Urethane Oligomer (UX-3)

28.087 parts of polypropylene glycol of number average molecular weight 1000 g/mol (Excenol 1020, manufactured by Asahi Glass Co., Ltd.), 1.545 parts of polypropylene glycol of number average molecular weight 10,000 g/mol (Preminol S4011, manufactured by Asahi Glass Co., Ltd.), 29.153 parts of tolylene diisocyanate, 0.022 parts of 2,6-di-t-butyl-p-cresol and 8.189 parts of isobornyl acrylate were prepared in a reaction vessel equipped with a stirrer, and they were cooled while stirring until the liquid temperature reached 15 °C. With the liquid cooled, 0.0365 parts of dibutyltin dilaurate was added. After that, the liquid was cooled to 15 °C, and 5.070 parts of 2-hydroxypropylacrylate was added, and at the point when the temperature stopped rising, the liquid temperature was raised to 35 °C and it was allowed to react. After the residual isocyanate group concentration (proportion with respect to prepared quantity) became 13.94 wt%, 0.0365 parts of dibutyltin dilaurate was added. After that, 27.861 parts of 2-hydroxyethylacrylate was added gradually such that the liquid temperature did not exceed 70 °C. After addition of the 2-hydroxyethylacrylate was complete, it was stirred and allowed to react at a liquid temperature of 70 °C. The reaction was considered finished when the residual isocyanate group concentration reached 0.1 wt% or less (proportion with respect to prepared quantity). The obtained urethane oligomer is referred to as UX-3.

Comparative Synthesis Example 4: Synthesis of Urethane Oligomer (UX-4)

60.9 parts of polypropylene glycol of number average molecular weight 10,000 g/mol, 2.7 parts of isophorone diisocyanate and 0.016 parts of 2,6-di-t-butyl-p-cresol were prepared in a reaction vessel equipped with a stirrer, and they were cooled while stirring until the liquid temperature reached 15 °C. After 0.52 parts of dibutyltin dilaurate was added, the liquid temperature was gradually raised to 35 °C over the course of 1 hour while stirring. After that, the liquid temperature was raised to 50 °C, and it was allowed to react. After the residual isocyanate group concentration (proportion with respect to prepared quantity) became 1.80 mass% or less, 0.80 parts of 2-hydroxyethylacrylate was added, and it was allowed to react while stirring at a liquid temperature of approximately 60 °C. The reaction was considered finished when the residual isocyanate group concentration reached 0.05 mass% or less. The obtained urethane oligomer is referred to as UX-4.

Comparative Synthesis Example 5: Synthesis of Urethane Oligomer (UX-5)

888.18 g of polypropylene glycol of number average molecular weight 3000 g/mol, 76.13 g of 2,4-tolylene diisocyanate and 0.24 g of 2,6-di-t-butyl-p-cresol were prepared in a reaction vessel equipped with a stirrer, and they were heated while stirring until the liquid temperature reached 25 °C. After addition of 0.4 g of dibutyltin dilaurate, the liquid temperature was gradually raised to 50 °C over the course of 30 minutes while stirring. It was stirred for another hour, and after the residual isocyanate group concentration (proportion with respect to prepared quantity) became 1.36 mass% or less, 9.07 g of γ-mercaptopropyl trimethoxysilane, 23.56 g of 2-hydroxyethylacrylate and 0.399 g of dibutyltin dilaurate were added, and allowed to react for 1 hour at a liquid temperature of 60 °C. After the residual isocyanate group concentration (proportion with respect to prepared quantity) became 1.08 mass% or less, 2.02 g of methanol was added, and it was allowed to react for 2 hours. The reaction was considered finished when the residual isocyanate group concentration reached 0.05 mass% or less. The obtained urethane oligomer is referred to as UX-5. The synthesis method of UX-5 is equivalent to the synthesis method in synthesis example 2 with the order of addition of methanol and γ-mercaptopropyl trimethoxysilane and 2-hydroxyethylacrylate changed. UX-5 contains substantially none of the urethane oligomer represented by the above formula (7).

Preparation Example 1: Preparation of Liquid Curable Resin Composition for Secondary Material

55.0 g of urethane oligomer UX-3 obtained in comparative synthesis example 3, 1.0 g of urethane oligomer UX-4 obtained in comparative synthesis example 4, 5.0 g of isobornyl acrylate (IBXA, manufactured by Osaka Organic Chemical Industry Co., Ltd.), 26.0 g of tripropylene glycol diacrylate (TPGDA, manufactured by Nippon Kayaku Co., Ltd.), 14.0 g of bisphenol A-based epoxy diacrylate (CN-120Z, manufactured by Sartomer Company Inc.), 0.50 g of 1-hydroxycyclohexyl phenyl ketone (Irgacure 184, manufactured by Ciba Specialty Chemicals Co., Ltd.) and 0.70 g of 2,4,6-trimethylbenzoyl diphenylphosphine oxide (Lucirin TPO, manufactured by BASF) were prepared in a reaction vessel equipped with a stirrer, and they were stirred at a liquid temperature of 50 °C until they became a homogenous transparent liquid, and a liquid curable resin composition for secondary material was thereby obtained.

Examples 1-8 and Comparative Examples 1-2

Liquid curable resin compositions having the compositions shown in Table 1 were produced, and their physical properties were evaluated according to the methods below.

Evaluation Methods

*(1) Viscosity*

Viscosity at 25°C of the compositions obtained in the examples and comparative examples were measured using viscometer B8H-BII (manufactured by Tokimec, Inc.).

*(2) Young's Modulus*

The Young's modulus after curing of the compositions obtained in the examples and comparative examples was measured. A glass sheet was coated with the liquid curable resin composition using an applicator bar having a thickness of 354 $\mu$m, and it was cured by irradiation with UV light with energy of 1 J/cm$^2$ in air, and a test film was thereby obtained. A long and narrow sample having a width of 6 mm and a length of 25 mm was created from the cured film. Tensile testing was performed based on JIS K7127 at temperature 25 °C and humidity 50 % using tensile tester AGS-1KND (manufactured by Shimadzu Corp.). The pulling rate was 1 mm/minute, and the Young's modulus was determined from the tensile strength at 2.5 % strain.

*(3) Curing Rate*

The curing rate of the compositions obtained in the examples and comparative examples was measured. A glass sheet was coated with the liquid curable resin composition using an applicator bar having a thickness of 200 $\mu$m, and it was cured by irradiation with UV light with energy of 20 mJ/cm$^2$ or 1 J/cm$^2$ in air, and two types of test film were thereby obtained. A long and narrow sample having a width of 6 mm and a length of 25 mm was created from each of the two types of cured film. Tensile testing was performed based on JIS K7127 at temperature 25 °C and humidity 50 % using tensile tester AGS-1KND (manufactured by Shimadzu Corp.). The pulling rate was 1 mm/minute, and the Young's modulus was determined from the tensile strength at 2.5 % strain. The ratio of Young's modulus of the test film cured at 20 mJ/cm$^2$ to the Young's modulus of the test film cured at 1 J/cm$^2$ was calculated by the formula below, and the curing rate of the each composition was evaluated.

$$\text{Curing rate } (\%) = Y_{200}/Y_{1000}$$

(In the formula, $Y_{200}$ is the Young's modulus of the film cured at 20 mJ/cm$^2$, and $Y_{1000}$ is the Young's modulus of the film cured at 1 J/cm$^2$.)

*(4) Fracture Strength and Fracture Elongation*

A glass sheet was coated with the liquid curable resin composition using an applicator bar having a thickness of 200 $\mu$m, and it was cured by irradiation with UV light with energy of 1 J/cm$^2$ in air, and a test film was thereby obtained. Fracture strength and fracture elongation of each specimen were measured under the following conditions using tensile tester AGS-50G (manufactured by Shimadzu Corp.).
Pulling rate: 50 mm/minute
Distance between gauge lines (measurement distance): 25 mm
Measurement temperature: 23 °C
Relative humidity: 50 %

*(5) Glass Adhesion Strength*

The glass adhesion strength of the compositions obtained in the examples and comparative examples was measured. A glass sheet was coated with the liquid curable resin composition using an applicator bar having a thickness of 354 $\mu$m, and it was cured by irradiation with UV light with energy of 1 J/cm$^2$ in air, and a test film was thereby obtained. A long and narrow sample having a width of 10 mm and a length of 50 mm was created from the cured film. After the sample was left to stand for 7 days at temperature 23 °C and humidity 50 %, a glass adhesion strength test was performed using tensile tester AGS-1KND (manufactured by Shimadzu Corp.) under the same temperature and humidity conditions. The pulling rate was 50 mm/minute, and the glass adhesion strength was determined from the tensile strength after 30 seconds.

*(6) Gel Percentage*

A glass sheet was coated with the liquid curable resin composition using an applicator bar having a thickness of 200 $\mu$m, and it was cured by irradiation with UV light with energy of 1 J/cm$^2$ in air, and a test film was thereby obtained. After curing, the sheet was left to stand for 24 hours in a constant-temperature constant-humidity container at temperature 23 °C and humidity 50 %. After that, 1.5 g of the cured product was cut off and put into cylindrical filter paper, and it was extracted for 12 hours at temperature 80°C using a Soxhlet extractor. After extraction, the sample was removed together with the filter paper, and was vacuum dried for 6 hours at temperature 60 °C and pressure 1.34 kPa or less. The sample was removed from the filter paper, and the weight was measured. The gel percentage was calculated by the formula below.

$$\text{Gel percentage (\%)} = (W1/W0) \times 100$$

(In the formula, W0 is the weight of the sample before extraction, and W 1 is the weight of the sample after extraction.)

*(7) Measurement of Quantity of Component (A3)*

Using the composition described in example 2, a test film was created by the same method as in measurement of Young's modulus. 2 g of the test film was immersed in 20 mL of tetrahydrofuran (THF) and left for 24 hours at 23 °C. Then, the quantity of the component extracted in THF was determined as P1, which was the peak area contained in the range of holding time of 20-29 minutes in gel permeation chromatography (GPC).

Additionally, as a cured film containing substantially none of component (A3), a test film was produced using a composition of the same components except that UX-5 obtained in comparative synthesis example 5 was used instead of UA-2 of example 2. The THF extract obtained from this test film was quantified, and the peak area was determined as P2.

The GPC conditions were as follows.

Column: The following four columns were connected in series: Toray TSK gel G4000H$_{XL}$, TSK gel G3000H$_{XL}$, TSK gel G3000H$_{XL}$, TSK gel G3000H$_{XL}$

HPLC: Toray HLC-8220

Sample quantity: 100 $\mu$L

Development solvent: THF

Flow rate: 1 mL/minute

Detection method: RI (measured wavelength is D line of sodium)

Meanwhile, urethane oligomers UA-6 obtained in synthesis example 6 having 20 mg, 60 mg or 100 mg of component (A3) were respectively dissolved in 8 mL of THF and analyzed by GPC under the same conditions, the peak areas were similarly determined, and a calibration curve for component (A3) was thereby created.

The value obtained by subtracting P2 from P1 was applied to the aforementioned calibration curve, and the quantity of component (A3) equivalent to the difference between P1 and P2 was quantified.

As a result, 2.5 mass% of the total quantity of urethane oligomer UA-2, which is component (A) used in example 2, was component (A3).

*(8) Observation of Defects of Optical Fiber Strand*

Using an optical fiber drawing apparatus (manufactured by Yoshida Kogyo Co., Ltd.), an optical fiber strand was prepared under the following conditions by coating a glass fiber with a two-layer coating layer made from a primary coating material and secondary coating material, using the compositions of the examples and comparative examples as the primary coating material, and using the liquid curable resin composition for secondary material obtained in preparation example 1 as the secondary coating material. The conditions of optical fiber drawing were as follows. As for the diameter of the optical fiber, the diameter of the optical fiber itself was 150 $\mu$m, the diameter after coating with the primary coating material was adjusted to 200 $\mu$m, and the diameter after coating with the secondary coating material was adjusted

to 260 μm. The drawing rate of the optical fiber was 120 m/minute. A UV lamp SMX 3.5 kw manufactured by ORC was used as the UV light irradiation apparatus for curing the compositions on the optical fiber. The quartz tube inside the UV light curing apparatus through which the optical fiber passed was purged with nitrogen gas at a flow rate of 10 L/minute.

The aforementioned fiber strand was immersed for 72 hours in 60 °C hot water, and then observed by microscope. It was evaluated visually whether voids occurred in the primary material and whether the primary material and the quartz glass peeled from each other.

[Table 1]

| | | Ex. 1 | Ex. 2 | Ex. 3 | Ex. 4 | Ex. 5 | Ex. 6 | Ex. 7 | Ex. 8 | Comp. Ex. 1 | Comp. Ex. 2 |
|---|---|---|---|---|---|---|---|---|---|---|---|
| | | Wt.% | Wt.% | Wt.% | Wt.% | Wt.% | Wt.% | Wt.% | Wt.% | Wt.% | Wt.% |
| (A) | UA-1 | 80 | | | | | | | | | |
| | UA-2 | | 80 | | | | | | | | |
| | UA-3 | | | 78 | | | | | | | |
| | UA-4 | | | | 76 | | | | | | |
| | UA-5 | | | | | | 70 | 70 | 70 | | |
| | UA-6 | | | | 2 | 4 | 10 | 10 | 10 | | |
| | UA-7 | | | | | | | | | 80 | |
| | UX-1 | | | | | | | | | 80 | |
| | UX-2 | | | | | | | | | | 80 |
| (B) | 2-ethylhexyl acrylate | | | | | | | 8.7 | | 10 | |
| | Isobornyl acrylate | 8.7 | 8.8 | 8.8 | 8.8 | 8.7 | | 8.1 | 9.8 | 2 | |
| | N-vinyl caprolactain | 9.1 | 9 | 9 | 9 | 9.1 | 9.1 | 9.7 | 9.6 | 10 | 6.3 |
| | Aronix M-113 | | | | | | | | | | 11.5 |
| (C) | Trimethylol propane triacrylate | 0.5 | 0.5 | 0.5 | 0.5 | 0.5 | 0.5 | 1.5 | 0.5 | | 0.5 |
| (D) | 2,4,6-trimethyl benzoyldiphenyl phosphine oxide | 0.8 | 0.8 | 0.8 | 0.8 | 0.8 | 0.8 | 0.8 | 1.2 | 1.2 | 0.8 |
| | 2-hydroxy-4-methoxybenzophenone | 0.15 | 0.15 | 0.15 | 0.15 | 0.15 | 0.15 | 0.15 | | 0.15 | 0.15 |
| (E) | γ-methacryloxypropyl trimethoxysilane | | | | | | | | | | 0.5 |
| | Tetraethoxy silane | 1 | 1 | 1 | 1 | 1 | 1 | 1 | 1 | 0.5 | 1 |
| | Sumilizer GP | 0.2 | 0.2 | 0.2 | 0.2 | 0.2 | 0.2 | 0.2 | 0.2 | 0.2 | 0.2 |
| | Sanol LS-765 | | | | | | | | | | 0.05 |
| | Leodor 460V | | | | | | | | 0.5 | | |
| | Total(may be more than 100% due to rounding of weight%) | 100.45 | 100.45 | 100.45 | 100.45 | 100.45 | 100.45 | 101.45 | 102.8 | 104.05 | 101 |
| | Test Method | Ex. 1 | Ex. 2 | Ex. 3 | Ex. 4 | Ex. 5 | Ex. 6 | Ex. 7 | Ex. 8 | Comp. Ex. 1 | Comp. Ex. 2 |
| | Viscosity (Pa·s) | 6.8 | 6.4 | 6.7 | 6.8 | 6.6 | 4.6 | 6.3 | 7.5 | 3.2 | 8.7 |

| Test Method | Ex. 1 | Ex. 2 | Ex. 3 | Ex. 4 | Ex. 5 | Ex. 6 | Ex. 7 | Ex. 8 | Comp. Ex. 1 | Comp. Ex. 2 |
|---|---|---|---|---|---|---|---|---|---|---|
| Young's modulus (MPa) | 0.84 | 0.66 | 0.81 | 0.71 | 0.46 | 0.44 | 0.76 | 0.6 | 1.41 | 1.00 |
| Curing rate | 0.86 | 0.88 | 0.85 | 0.80 | 0.85 | 0.75 | 0.67 | 0.82 | 0.81 | 0.72 |
| Fracture strength (MPa) | 2.3 | 2.1 | 2.3 | 2.3 | 1.4 | 0.93 | 2.8 | 2.7 | 2.0 | 2.1 |
| Fracture elongation (%) | 188 | 197 | 191 | 201 | 194 | 178 | 138 | 220 | 174 | 175 |
| Glass adhesion strength (N/m) | 48 | 70 | 50 | 53 | 42 | 26 | 41 | 50 | 31 | 21 |
| Gel percentage (%) | 81 | 79 | 80 | 79 | 75 | 75 | 77 | 81 | 92 | 87 |
| Defects in optical fiber strand | Yes | Yes | Yes | Yes | Yes | Yes | Yes | No | Yes | Yes |

In the table, Aronix M-113: nonylphenol EO modified acrylate (manufactured by Toagosei Co., Ltd.). Sumilizer GP: 6-[3-(3-t-butyl-4-hydroxy-5-methyl)propoxy-2,4,8,10-tetra-t-butyldibenz[d,f][1,3,2]-dioxaphosphepine (manufactured by Sumitomo Chemical Industries Co., Ltd.). Sanol LS-765: Photostabilizer manufactured by Ciba Specialty Chemicals Co., Ltd. Leodor 460V: Surfactant (polyoxyethylene sorbitan tetraoleate), manufactured by Kao Corp.

As is clear from Table 1, the composition of the present invention has resin liquid viscosity appropriate for an optical fiber coating agent, it provides flexibility suitable for primary material, and has excellent mechanical strength. The composition of the present invention also has excellent glass adhesion strength, which is required in primary material. The gel percentage of the cured products prepared from the compositions of the examples was lower than in the comparative examples, and it was seen that they contained urethane oligomer having the structure of the above formula (3). On the other hand, in comparative examples 1 and 2, which do not fall within the range of component (A), flexibility of the cured product was diminished.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms *(i.e.,* meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it are individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

**Claims**

1. A radiation curable resin composition for forming the primary coating layer of optical fiber, wherein the contained quantity of

   (A) urethane oligomer containing the reactants of an aliphatic polyester or polyether diol and a diisocyanate and a monohydric alcohol, or urethane oligomer obtained by reacting the reactants of an aliphatic polyester or polyether diol and a diisocyanate with a monohydric alcohol and then reacting a hydroxyl group-containing (meth)acrylate, is 50-90 mass%, said diisocyanate being selected from the group consisting of 2,4-tolylene diisocyanate and 2,6-tolylene diisocyanate;
   (B) monomer having one ethylenically unsaturated group, is 5-45 mass%;
   (C) monomer having two or more ethylenically unsaturated groups, is 2 mass% or less;
   (D) a polymerization inhibitor, is 0.1-10 mass%; and
   (E) a silane coupling agent, is 0.01-2 mass%,
   wherein component (A) comprises one or more urethane oligomers selected from the group consisting of

   (A1) a urethane (meth)acrylate having an average of more than 1.0 structural units originating from polyester or polyether diol and having two (meth)acryloyl groups,
   (A2) a urethane (meth)acrylate having an average of more than 1.0 structural units originating from polyester or polyether diol and having one (meth)acryloyl group, and
   (A3) a urethane oligomer having an average of more than 1.0 structural units originating from polyester or polyether diol and having no (meth)acryloyl groups,
   wherein the quantity of component (A1) is 30-60 mass%, the quantity of component (A2) is 30-60 mass%, and the quantity of component (A3) is 1-20 mass% with respect to the total quantity of component (A).

2. The radiation curable resin composition for forming the primary coating layer of optical fiber according to claim 1, wherein component (A) comprises each of (A1), (A2), and (A3).

3. The radiation curable resin composition for forming the primary coating layer of optical fiber according to claim 1 or 2, wherein

(A1) is a compound with general formula A-(ICN-POL)$_n$-ICN-A,
(A2) is a compound with general formula A-(ICN-POL)$_n$-ICN-R$^1$, and
(A3) is a compound with general formula R$^2$-(ICN-POL)$_n$-ICN-R$^2$, wherein
A is an organic group having a (meth)acryloyl group,
ICN is a structural unit originating from diisocyanate,
POL is a structural unit originating from polyester or polyether diol,
R$^1$ and R$^2$ are independently organic groups that do not have a (meth)acryloyl group, and
n is a number greater than 1.0.

4. The radiation curable resin composition for forming the primary coating layer of optical fiber according to any one of claims 1 through 3, wherein the quantity of component (A1) is 40-50 mass%, the quantity of component (A2) is 40-50 mass% and the quantity of component (A3) is 1-10 mass% with respect to the total quantity of component (A).

5. The radiation curable resin composition for forming the primary coating layer of optical fiber according to claim 1, wherein said component (A) is a urethane oligomer obtained by reacting a monohydric alcohol with the reactants of an aliphatic polyester or polyether diol and a diisocyanate, and then reacting a hydroxyl group-containing (meth)acrylate and a silane coupling agent.

6. The radiation curable resin composition for forming the primary coating layer of optical fiber according to claim 1, wherein said component (A) is a urethane oligomer containing the reactants of an aliphatic polyester diol and a diisocyanate and a monohydric alcohol, or a urethane oligomer obtained by reacting the reactants of an aliphatic polyester diol and a diisocyanate with a monohydric alcohol and then reacting a hydroxyl group-containing (meth)acrylate.

7. The radiation curable resin composition for forming the primary coating layer of optical fiber according to claim 1, wherein said component (A) is a urethane oligomer containing the reactants of an aliphatic polyether diol and a diisocyanate and a monohydric alcohol, or a urethane oligomer obtained by reacting the reactants of an aliphatic polyether diol and a diisocyanate with a monohydric alcohol and then reacting a hydroxyl group-containing (meth)acrylate.

8. An optical fiber primary coating layer obtained by curing the radiation curable resin composition according any one of claims 1 through 7.

9. The optical fiber primary coating layer according to claim 8, wherein the Young's modulus is 0.9 MPa or less.

10. An optical fiber strand comprising an optical fiber primary coating of claim 8 or 9 and any optical fiber secondary coating.

11. An optical fiber strand comprising an optical fiber primary coating layer according to claim 8 or 9 and an optical fiber secondary coating layer having a Young's modulus of at least 1000 MPa, wherein said optical fiber secondary coating layer is in contact with the outside of the optical fiber primary coating layer.

12. Use of a radiation curable resin composition for forming the primary coating layer of optical fiber, wherein said radiation curable resin composition has a contained quantity of

(A) 50-90 mass% of urethane oligomer containing the reactants of an aliphatic polyester or polyether diol and a diisocyanate and a monohydric alcohol, or urethane oligomer obtained by reacting the reactants of an aliphatic polyester or polyether diol and a diisocyanate with a monohydric alcohol and then reacting a hydroxyl group containing (meth)acrylate, said diisocyanate being selected from the group consisting of 2,4 tolylene diisocyanate and 2,6 tolylene diisocyanate;
(B) 5-45 mass% of monomer having one ethylenically unsaturated group;
(C) 2 mass% or less of monomer having two or more ethylenically unsaturated groups;
(D) 0.1-10 mass% of a polymerization inhibitor; and

(E) 0.01-2 mass% of a silane coupling agent.

13. Use of a radiation curable resin composition according to claim 12, wherein component (A) comprises one or more urethane oligomers selected from the group consisting of

    (A1) a urethane (meth)acrylate having an average of more than 1.0 structural units originating from polyester or polyether diol and having two (meth)acryloyl groups,
    (A2) a urethane (meth)acrylate having an average of more than 1.0 structural units originating from polyester or polyether diol and having one (meth)acryloyl group, and
    (A3) a urethane oligomer having an average of more than 1.0 structural units originating from polyester or polyether diol and having no (meth)acryloyl groups.

14. Use of a radiation curable resin composition according to claim 13, wherein

    (A1) is a compound with general formula A-(ICN-POL)$_n$-ICN-A,
    (A2) is a compound with general formula A-(ICN-POL)$_n$-ICN-R$^1$, and
    (A3) is a compound with general formula R$^2$-(ICN-POL)$_n$-ICN-R$^2$, wherein
    A is an organic group having a (meth)acryloyl group,
    ICN is a structural unit originating from diisocyanate,
    POL is a structural unit originating from polyester or polyether diol,
    R$^1$ and R$^2$ are independently organic groups that do not have a (meth)acryloyl group, and
    n is a number greater than 1.0.

15. Use of a radiation curable resin composition according to claim 13 or 14, wherein component (A) comprises each of (A1), (A2), and (A3).

16. Use of a radiation curable resin composition according to any one of claims 13 through 15, wherein the quantity of component (A1) is 30-60 mass%, the quantity of component (A2) is 30-60 mass%, and the quantity of component (A3) is 1-20 mass% with respect to the total quantity of component (A), preferably the quantity of component (A1) is 40-50 mass%, the quantity of component (A2) is 40-50 mass% and the quantity of component (A3) is 1-10 mass% with respect to the total quantity of component (A).

**Patentansprüche**

1. Strahlungshärtbare Harzzusammensetzung zum Bilden der primären Faseroptik-Ummantelungsschicht, wobei die enthaltene Menge an

    (A) Urethanoligomer, enthaltend die Reaktanten eines aliphatischen Polyester- oder Polyetherdiols und eines Diisocyanats und eines monohydrischen Alkohols, oder Urethanoligomer, erhalten durch Reagieren der Reaktanten eines aliphatischen Polyester- oder Polyetherdiols und eines Diisocyanats mit einem monohydrischen Alkohol und dann Reagieren einer ein (Meth)acrylat enthaltenden Hydroxylgruppe 50-90 Masse% ist, wobei das Diisocyanat aus der Gruppe, bestehend aus 2,4-Toluylendiisocyanat und 2,6-Toluylendiisocyanat ausgewählt ist;
    (B) Monomer mit einer ethylenisch ungesättigten Gruppe 5-45 Masse% ist;
    (C) Monomer mit zwei oder mehr ethylenisch ungesättigten Gruppen 2 Masse% oder weniger ist.
    (D) einem Polymerisationshemmer 0,1-10 Masse% ist; und
    (E) ein Silan-Kopplungsmittel 0,01-2 Masse% ist,
    wobei Komponente (A) ein oder mehrere Urethanoligomere umfasst, ausgewählt aus der Gruppe bestehend aus

        (A1) einem Urethan(meth)acrylat mit einem Durchschnitt von mehr als 1,0 strukturellen Einheiten von Polyester- oder Polyetherdiol und mit zwei (Meth)acryloylgruppen,
        (A2) einem Urethan(meth)acrylat mit einem Durchschnitt von mehr als 1,0 strukturellen Einheiten von Polyester- oder Polyetherdiol und mit einer (Meth)acryloylgruppe, und
        (A3) einem Urethanoligomer mit einem Durchschnitt von mehr als 1,0 strukturellen Einheiten von Polyester- oder Polyetherdiol und mit keinen (Meth)acryloylgruppen,

    wobei die Menge an Komponente (A1) 30-60 Masse% ist, die Menge an Komponente (A2) 30-60 Masse% ist und die Menge an Komponente (A3) 1-20 Masse% ist bezogen auf die Gesamtmenge an Komponente (A).

2. Strahlungshärtbare Harzzusammensetzung zum Bilden der primären Faseroptik-Ummantelungsschicht nach Anspruch 1, wobei Komponente (A) jeweils (A1), (A2) und (A3) umfasst.

3. Strahlungshärtbare Harzzusammensetzung zum Bilden der primären Faseroptik-Ummantelungsschicht nach Anspruch 1 oder 2, wobei

(A1) eine Verbindung der allgemeinen Formel A-(ICN-POL)$_n$-ICN-A ist,

(A2) eine Verbindung der allgemeinen Formel A-(ICN-POL)$_n$-ICN-R$^1$ ist, und

(A3) eine Verbindung der allgemeinen Formel R$^2$-(ICN-POL)$_n$-ICN-R$^2$ ist, wobei

A eine organische Gruppe mit einer (Meth)acryloylgruppe ist,

ICN eine strukturelle Einheit vonDiisocyanat ist,

POL eine strukturelle Einheit von Polyester- oder Polyetherdiol ist,

R$^1$ und R$^2$ unabhängig organische Gruppen sind, die keine (Meth)acryloylgruppe haben, und

n eine Zahl größer als 1,0 ist.

4. Strahlungshärtbare Harzzusammensetzung zum Bilden der primären Faseroptik-Ummantelungsschicht nach einem der Ansprüche 1 bis 3, wobei die Menge an Komponente (A1) 40-50 Masse% ist, die Menge an Komponente (A2) 40-50 Masse% ist und die Menge an Komponente (A3) 1-10 Masse% ist, bezogen auf die Gesamtmenge an Komponente (A).

5. Strahlungshärtbare Harzzusammensetzung zum Bilden der primären Faseroptik-Ummantelungsschicht nach Anspruch 1, wobei die Komponente (A) ein Urethanoligomer ist, erhalten durch Reagieren eines monohydrischen Alkohols mit den Reaktanten eines aliphatischen Polyester- oder Polyetherdiols und eines Diisocyanats, und dann Reagieren eines eine Hydroxylgruppe enthaltenden (Meth)acrylats und eines Silan-Kopplungsmittels.

6. Strahlungshärtbare Harzzusammensetzung zum Bilden der primären Faseroptik-Ummantelungsschicht nach Anspruch 1, wobei die Komponente (A) ein Urethanoligomer ist, enthaltend die Reaktanten eines aliphatischen Polyesterdiols und eines Diisocyanats und eines monohydrischen Alkohols, oder ein Urethanoligomer ist, erhalten durch Reagieren der Reaktanten eines aliphatischen Polyesterdiols und eines Diisocyanats mit einem monohydrischen Alkohol, und dann Reagieren eines eine Hydroxylgruppe enthaltenden (Meth)acrylats.

7. Strahlungshärtbare Harzzusammensetzung zum Bilden der primären Faseroptik-Ummantelungsschicht nach Anspruch 1, wobei die Komponente (A) ein Urethanoligomer ist, enthaltend die Reaktanten eines aliphatischen Polyetherdiols und eines Diisocyanats und eines monohydrischen Alkohols, oder ein Urethanoligomer ist, erhalten durch Reagieren der Reaktanten eines aliphatischen Polyetherdiols und eines Diisocyanats mit einem monohydrischen Alkohol, und dann Reagieren eines eine Hydroxylgruppe enthaltenden (Meth)acrylats.

8. Primäre Faseroptik-Ummantelungsschicht, erhalten durch Härten der strahlungshärtbaren Harzzusammensetzung nach einem der Ansprüche 1 bis 7.

9. Primäre Faseroptik-Ummantelungsschicht nach Anspruch 8, wobei der Young's Modulus 0,9 MPa oder weniger ist.

10. Faseroptikstrang, umfassend eine primäre Faseroptik-Ummantelungsschicht von Anspruch 8 oder 9 und eine beliebige sekundäre Faseroptik-Ummantelungsschicht.

11. Faseroptikstrang, umfassend eine primäre Faseroptik-Ummantelungsschicht nach Anspruch 8 oder 9 und eine sekundäre Faseroptik-Ummantelungsschicht mit einem Young's Modulus von mindestens 1000 MPa, wobei die sekundäre Faseroptik-Ummantelungsschicht mit der Außenseite der primären Faseroptik-Ummantelungsschicht in Kontakt ist.

12. Verwendung einer strahlungshärtbaren Harzzusammensetzung zum Bilden der primären Faseroptik-Ummantelungsschicht, wobei die strahlungshärtbare Harzzusammensetzung eine Menge enthält von

(A) 50-90 Masse% an Urethanoligomer, enthaltend die Reaktanten eines aliphatischen Polyester- oder Polyetherdiols und eines Diisocyanats und eines monohydrischen Alkohols, oder Urethanoligomer, erhalten durch Reagieren der Reaktanten eines aliphatischen Polyester- oder Polyetherdiols und eines Diisocyanats mit einem monohydrischen Alkohol, und dann Reagieren eines eine Hydroxylgruppe enthaltenden (Meth)acrylats, wobei das Diisocyanat aus der Gruppe bestehend aus 2,4-Toluylendiisocyanat und 2,6-Toluylendiisocyanat ausgewählt ist;

(B) 5-45 Masse% an Monomer mit einer ethylenisch ungesättigten Gruppe;

(C) 2 Masse% oder weniger an Monomer mit zwei oder mehr ethylenisch ungesättigten Gruppen;

(D) 0,1-10 Masse% eines Polymerisationshemmers; und

(E) 0,01-2 Masse% eines Silan-Kopplungsmittels.

**13.** Verwendung einer strahlungshärtbaren Harzzusammensetzung nach Anspruch 12, wobei Komponente (A) ein oder mehrere Urethanoligomere umfasst, ausgewählt aus der Gruppe bestehend aus

(A1) einem Urethan(meth)acrylat mit einem Durchschnitt von mehr als 1,0 strukturellen Einheiten von Polyester- oder Polyetherdiol und mit zwei (Meth)acryloylgruppen,

(A2) einem Urethan(meth)acrylat mit einem Durchschnitt von mehr als 1,0 strukturellen Einheiten von Polyester- oder Polyetherdiol und mit einer (Meth)acryloylgruppe, und

(A3) einem Urethanoligomer mit einem Durchschnitt von mehr als 1,0 strukturellen Einheiten von Polyester- oder Polyetherdiol und mit keinen (Meth)acryloylgruppen.

**14.** Verwendung einer strahlungshärtbaren Harzzusammensetzung nach Anspruch 13, wobei

(A1) eine Verbindung der allgemeinen Formel A-(ICN-POL)$_n$-ICN-A ist,

(A2) eine Verbindung der allgemeinen Formel A-(ICN-POL)$_n$-ICN-R$^1$ ist, und

(A3) eine Verbindung der allgemeinen Formel R$^2$-(ICN-POL)$_n$-ICN-R$^2$ ist, wobei

A eine organische Gruppe mit einer (Meth)acryloylgruppe ist,

ICN eine strukturelle Einheit von Diisocyanat ist,

POL eine strukturelle Einheit von Polyester- oder Polyetherdiol ist,

R$^1$ und R$^2$ unabhängig organische Gruppen sind, die keine (Meth)acryloylgruppe haben, und

n eine Zahl größer als 1,0 ist.

**15.** Verwendung einer strahlungshärtbaren Harzzusammensetzung nach Anspruch 13 oder 14, wobei Komponente (A) jeweils (A1), (A2) und (A3) umfasst.

**16.** Verwendung einer strahlungshärtbaren Harzzusammensetzung nach einem der Ansprüche 13 bis 15, wobei die Menge an Komponente (A1) 30-60 Masse% ist, die Menge an Komponente (A2) 30-60 Masse% ist und die Menge an Komponente (A3) 1-20 Masse% ist, bezogen auf die Gesamtmenge an Komponente (A), vorzugsweise die Menge an Komponente (A1) 40-50 Masse% ist, die Menge an Komponente (A2) 40-50 Masse% ist und die Menge an Komponente (A3) 1-10 Masse% ist, bezogen auf die Gesamtmenge an Komponente (A).

**Revendications**

**1.** Composition de résine durcissable par rayonnement pour former la couche de revêtement primaire d'une fibre optique, dans laquelle la quantité contenue

(A) d'oligomère d'uréthane contenant les corps réagissant d'un polyester ou d'un polyéther diol aliphatique et d'un diisocyanate et d'un alcool monovalent, ou d'oligomère d'uréthane obtenu par réaction des corps réagissant d'un polyester aliphatique ou d'un polyéther diol et d'un diisocyanate avec un alcool monovalent et par réaction subséquente d'un (méth)acrylate contenant un groupe hydroxyle, est de 50-90 % en masse, ledit diisocyanate étant choisi dans le groupe constitué de diisocyanate de 2,4-tolylène et de diisocyanate de 2,6-tolylène ;

(B) de monomère présentant un groupe éthyléniquement insaturé, est de 5-45 % en masse ;

(C) de monomère présentant deux ou plusieurs groupes éthylénique-ment insaturés, est de 2 % en masse ou inférieure ;

(D) d'un inhibiteur de polymérisation est de 0,1-10 % en masse ; et

(E) d'un agent de couplage de silane, est de 0,01-2 % en masse,

dans laquelle le constituant (A) comprend un ou plusieurs oligomères d'uréthane choisis dans le groupe constitué par

(A1) un (méth)acrylate d'uréthane ayant une moyenne de plus de 1,0 unité structurelle provenant de polyester ou de polyéther diol et présentant deux groupes (méth)acryloyle,

(A2) un (méth)acrylate d'uréthane présentant une moyenne de plus de 1,0 unité structurelle provenant de polyester ou de polyéther diol et présentant un groupe (méth)acryloyle, et

(A3) un oligomère d'uréthane présentant une moyenne de plus de 1,0 unité structurelle provenant de polyester ou de polyéther diol et ne présentant pas de groupe (méth)acryloyle,

dans laquelle la quantité de constituant (A1) est de 30-60 % en masse, la quantité de constituant (A2) est de 30-60 % en masse, et la quantité de constituant (A3) est de 1-20 % en masse rapportée à la quantité totale de constituant (A).

2. Composition de résine durcissable par rayonnement pour former la couche de revêtement primaire d'une fibre optique selon la revendication 1, dans laquelle le constituant (A) comprend chacun de (A1), (A2), et (A3).

3. Composition de résine durcissable par rayonnement pour former la couche de revêtement primaire d'une fibre optique selon la revendication 1 ou 2, dans laquelle

(A1) est un composé avec la formule générale A-(ICN-POL)$_n$-ICN-A,

(A2) est un composé avec la formule générale A-(ICN-POL)$_n$-ICN-R$^1$, et

(A3) est un composé avec la formule générale R$^2$-(ICN-POL)$_n$-ICN-R$^2$, où

A est un groupe organique présentant un groupe (méth)acryloyle,

ICN est une unité structurelle provenant de diisocyanate,

POL est une unité structurelle provenant de polyester ou de polyéther diol,

R$^1$ et R$^2$ sont indépendamment des groupes organiques qui ne présentent pas un groupe (méth)acryloyle, et

n est un nombre supérieur à 1,0.

4. Composition de résine durcissable par rayonnement pour former la couche de revêtement primaire d'une fibre optique selon l'une quelconque des revendications 1 à 3, dans laquelle la quantité de constituant (A1) et de 40-50 % en masse, la quantité de constituant (A2) est de 40-50 % en masse et la quantité de constituant (A3) est de 1-10 % en masse par rapport à la quantité totale de constituant (A).

5. Composition de résine durcissable par rayonnement pour former la couche de revêtement primaire d'une fibre optique selon la revendication 1, dans laquelle ledit constituant (A) est un oligomère d'uréthane obtenu par réaction d'un alcool monovalent avec les corps réagissant d'un polyester aliphatique ou d'un polyéther diol et d'un diisocyanate, et par réaction subséquente d'un (méth)acrylate contenant un groupe hydroxyle et d'un agent de couplage de silane.

6. Composition de résine durcissable par rayonnement pour former la couche de revêtement primaire d'une fibre optique selon la revendication 1, dans laquelle ledit constituant (A) est un oligomère d'uréthane contenant les corps réagissant d'un polyester diol aliphatique et d'un diisocyanate et d'un alcool monovalent, ou un oligomère d'uréthane obtenu par réaction des corps réagissant d'un polyester diol aliphatique et d'un diisocyanate avec un alcool monovalent et par réaction subséquente d'un (méth)acrylate contenant un groupe hydroxyle.

7. Composition de résine durcissable par rayonnement pour former la couche de revêtement primaire d'une fibre optique selon la revendication 1, dans laquelle ledit constituant (A) est un oligomère d'uréthane contenant les corps réagissant d'un polyéther diol aliphatique et d'un diisocyanate et d'un alcool monovalent, ou un oligomère d'uréthane obtenu par réaction des corps réagissant d'un polyéther diol aliphatique et d'un diisocyanate avec un alcool monovalent et par réaction subséquente d'un (méth)acrylate contenant un groupe hydroxyle.

8. Couche de revêtement primaire d'une fibre optique obtenue par durcissement de la composition de résine durcissable par rayonnement selon l'une quelconque des revendications 1 à 7.

9. Couche de revêtement primaire d'une fibre optique selon la revendication 8, dans laquelle le module de Young est de 0,9 MPa ou inférieur.

10. Toron de fibre optique comprenant un revêtement primaire de fibre optique selon la revendication 8 ou 9 et un revêtement secondaire de fibre optique quelconque.

11. Toron de fibre optique comprenant une couche de revêtement primaire de fibre optique selon la revendication 8 ou 9 et une couche de revêtement secondaire de fibre optique présentant un module de Young d'au moins 1 000 MPa, dans lequel ladite couche de revêtement secondaire de fibre optique est en contact avec l'extérieur de la couche de revêtement primaire de fibre optique.

12. Utilisation d'une composition de résine durcissable par rayonnement pour former la couche de revêtement primaire d'une fibre optique, dans laquelle ladite composition de résine durcissable par rayonnement présente une quantité contenue de

(A) 50-90 % en masse d'oligomère d'uréthane contenant les corps réagissant d'un polyester ou d'un polyéther diol aliphatique et d'un diisocyanate et d'un alcool monovalent, ou d'un oligomère d'uréthane obtenu par réaction des corps réagissant d'un polyester aliphatique ou d'un polyéther diol et d'un diisocyanate avec un alcool monovalent et par réaction subséquente d'un (méth)acrylate contenant un groupe hydroxyle, ledit diisocyanate étant choisi dans le groupe constitué de diisocyanate de 2,4-tolylène et de diisocyanate de 2,6-tolylène ;
(B) 5-45 % en masse de monomère présentant un groupe éthyléniquement insaturé ;
(C) 2 % en masse ou moins de monomère présentant deux ou plusieurs groupes éthyléniquement insaturés ;
(D) 0,1-10 % en masse d'un inhibiteur de polymérisation ; et
(E) 0,01-2 % en masse d'un agent de couplage de silane.

13. Utilisation d'une composition de résine durcissable par rayonnement selon la revendication 12, dans laquelle le constituant (A) comprend un ou plusieurs oligomères d'uréthane choisis dans le groupe constitué de

(A1) un (méth)acrylate d'uréthane ayant une moyenne de plus de 1,0 unité structurelle provenant de polyester ou de polyéther diol et présentant deux groupes (méth)acryloyle,
(A2) un (méth)acrylate d'uréthane présentant une moyenne de plus de 1,0 unité structurelle provenant de polyester ou de polyéther diol et présentant un groupe (méth)acryloyle, et
(A3) un oligomère d'uréthane présentant une moyenne de plus de 1,0 unité structurelle provenant de polyester ou de polyéther diol et ne présentant pas de groupe (méth)acryloyle.

14. Utilisation d'une composition de résine durcissable par rayonnement selon la revendication 13, dans laquelle

(A1) est un composé avec la formule générale $A-(ICN-POL)_n-ICN-A$,
(A2) est un composé avec la formule générale $A-(ICN-POL)_n-ICN-R^1$, et
(A3) est un composé avec la formule générale $R^2-(ICN-POL)_n-ICN-R^2$, où
A est un groupe organique présentant un groupe (méth)acryloyle,
ICN est une unité structurelle provenant d'un diisocyanate,
POL est une unité structurelle provenant de polyester ou de polyéther diol,
$R^1$ et $R^2$ sont indépendamment des groupes organiques qui ne présentent pas un groupe (méth)acryloyle, et
n est un nombre entier supérieur à 1,0.

15. Utilisation d'une composition de résine durcissable par rayonnement selon la revendication 13 ou 14, dans laquelle le constituant (A) comprend chacun de (A1), (A2), et (A3).

16. Utilisation d'une composition de résine durcissable par rayonnement selon l'une quelconque des revendications 13 à 15, dans laquelle la quantité de constituant (A1) est de 30-60 % en masse, la quantité de constituant (A2) est de 30-60 % en masse, et la quantité de constituant (A3) est de 1-20 % en masse par rapport à la quantité totale de constituant (A), de préférence la quantité de constituant (A1) est de 40-50 % en masse, la quantité de constituant (A2) est de 40-50 % en masse et la quantité de constituant (A3) est de 1-10 % en masse par rapport à la quantité totale de constituant (A).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H5306146 B
- JP H5306147 B
- JP 2001130929 A
- JP 2005263946 A
- JP H5281431 B

- JP 2006528374 PCT
- US 20030123839 A
- WO 2006057795 A
- US 2002146225 A